# EUROPEAN PATENT APPLICATION

(11) **EP 0 965 786 A1**
(43) Date of publication of application: **22.12.1999**
(21) Application number: 99304662.2
(22) Date of filing: 15.06.1999
(51) Int. Cl.: F16M 11/28

(54) **Support, particularly for flat-panel monitors**

(30) Priority: 18.06.1998 GB 9813075
(71) Applicant: Grorud Engineering Limited, Consett, Durham DH8 8JA (GB)
(72) Inventor: Hillary, Christopher James, North Baddesley, Southamton SO52 9LY (GB)
(74) Representative: Mosey, Stephen George

(57) **Abstract**

A support for a computer monitor which incorporates a flat panel display screen comprises an adjustable height column (11) formed by telescopically arranged inner and outer tubes (28, 29) which are linked via a counterbalancing gas strut (14). The support has locking means (16) for retaining the column at an adjusted height position and the sliding between the tubes is facilitated by skid pads (24) and also by wheels (82) carried by spring loaded bogies (71) secured to the inner tube, engaging in longitudinal grooves (34) in the inner surfaces of the outer tube. Hinge arm assemblies (12) at opposite sides of the outer tube are adapted to be connected to a carrier (13) custom designed for mounting a specific form of flat panel monitor, such that the monitor can be tilted relative to the column. The column can be rotatable on a turntable (21).

## Description

This invention relates to a support for an object, particularly in the form of an adjustable stand for use with a computer monitor or the like. The support would normally be used with a computer monitor which incorporates a flat panel display screen.

Flat panel monitors are currently on the market in relatively small numbers but are predicted to take a substantial share of the monitors market during the next few years (replacing about 1/3 of the CRT based versions), due mainly to their smaller size, lower power consumption and sharper display images. As far as the user of flat panels is concerned, the optimum viewing angle to work with the screen is narrower than compared to a CRT based screen. This means that the user will benefit from being provided with an adjustable stand to obtain a comfortable viewing position where the displayed screen characters are clearly visible.

Many well known manufacturers of computer monitors are now selling flat panel versions and the majority of these offer simple stands with tilt adjustment and some offer a rotate feature as well. Very few have height adjustment, but most users consider this to be a desirable feature. Taking all requirements into account, an ideal stand for a flat panel based computer monitor would be provided with one or more of the following features:
A) Height adjustment, sufficient to satisfy 5% ILE to 95% ILE users.
B) Substantial tilt adjustment to suit seated or standing users.
C) Rotate feature, for single or shared users.
D) Easy attachment to a wide range of monitors.
E) Cable Management
F) Low adjustment force for users.

An object of the invention is to provide a support, particularly for flat-panel monitors, in a convenient and effective form.

According to the invention a support, particularly for flat-panel monitors or the like, comprises first and second relatively slidable inner and outer telescopic members forming a height adjustable column, retention means for retaining the column in at least two different adjusted height positions when the support carries a monitor or the like, in use, and connection means extending from the column and adapted to be connected directly or indirectly, in use, to the monitor to allow it to be tilted relative to the column.

The invention will now be described, by way of example, with reference to the accompanying drawings, in which:
Figure 1 is a side view of one embodiment of a support according to the invention,
Figure 2 is a front view of the support of Figure 1;
Figure 3 is an enlarged cross-sectional view on the line 3-3 of Figure 1,
Figure 4 is an enlarged, fragmentary cross-sectional view on line 4-4 of Figure 3,
Figure 5 is a plan view of the support,
Figure 6 is a plan view of a base plate of the support,
Figure 7 is a cross-sectional vie on the line 7-7 of Figure 6,
Figure 8 is a plan view of a turntable plate of the support,
Figure 9 is a partial section on the centre line of the turntable plate,
Figure 10 is an enlarged side view of a skid pad for use between the turntable plate and base plate,
Figure 11 is a front view of an inner tube of a height adjustable column of the support,
Figure 12 is a side view of the inner tube, with a part being a sectional view of line 12-12- of Figure 11,
Figure 13 is an end view of the inner tube,
Figure 14 is a front view of an outer tube of the support column,
Figure 15 is a side view of the outer tube,
Figure 16 is an end view of the outer tube,
Figure 17 is an inner side view of a hinge arm of the support,
Figure 18 is an end view of the hinge arm,
Figure 19 is a top view of the hinge arm,
Figure 20 is a side view, to an enlarged scale, of a pivot bush used with the hinge arm in a hinge arm assembly,
Figures 21 and 22 are respective opposite end views of the pivot bush,
Figures 23 and 24 are respectively a side view and a rear view of a spring bogie attachable to the inner tube,
Figure 25 is an end view of a wheel mountable on one end of the spring bogie,
Figures 26 and 27 are respectively a side view and a plan view, to an enlarged scale, of a clip hinge which forms part of said hinge arm assembly,
Figure 28 is a side view of a gas strut employed within said height adjustable column,
Figures 29 and 30 are respectively a side view and a rear plan view, to an enlarged scale, of a lock cam of a lock assembly of the column of the support,
Figures 31 and 32 are respectively a front view and a side view, to an enlarged scale, of a lock retainer of the lock assembly,
Figure 33 is a side view to an enlarged scale of a pad brake of the lock assembly,
Figures 34 and 35 are respectively a side view and an inner plan view of a cable duct securable to the outer tube of the column of the support, and
Figures 36 and 37 show two positions of the support carrying a monitor.

Although the invention relates to a support in general, it will be described below in relation to an adjustable stand for carrying a computer monitor, in particular one which incorporates a flat panel display screen, such a monitor hereinafter being referred to for convenience as a flat panel monitor.

The support shown in the drawings comprises a base assembly 10, vertically upstanding from which is a height adjustable column 11 at the upper end of which, is a hinge arm assembly 12 which, in this embodiment, is shown carrying an adapter plate 13 which, in use, receives the monitor. Received within the column 11 is a gas strut 14, and a cable duct 15 is arranged at a rear face of the column. At a front face of the column there is provided a lock assembly 16.

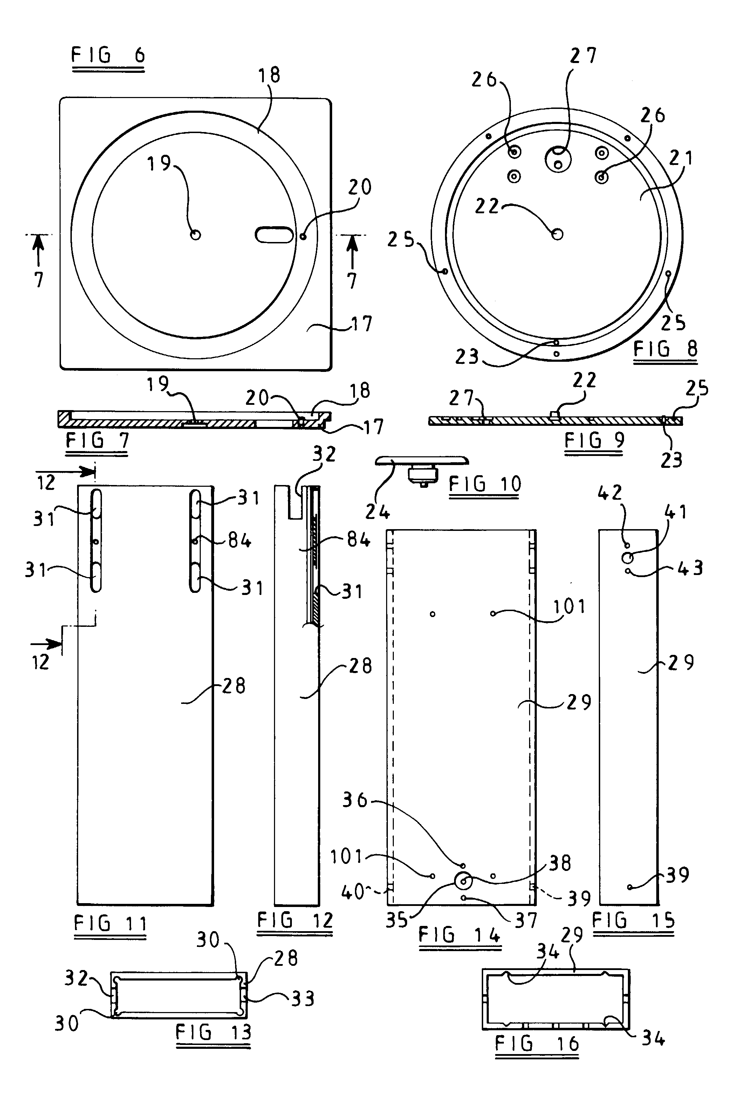

The base assembly 10 is formed of a square base plate 17 which has a central circular recess 18 in its upper surface, this recess being formed with a slightly deeper annular portion at the outer periphery thereof. A circular, downwardly and outwardly stepped bore 19 is provided at the centre of the circular recess, whilst a stop pin 20 fitted in the base plate has its upper portion extending slightly into said slightly deeper annulus of the recess 18 as shown best in Figures 6 and 7.

The other part of the base assembly 10 is a circular turntable plate 21 which on its face which is lowermost in use, has a central peg 22 adapted to be received in the bore 19. The outer diameter of the plate 21 is slightly smaller than the outer diameter of the recess 18, so that the turntable plate 21 can rotate about the base 17 with its upper surface, which is outermost in use, being substantially flush with the upper surface of the base plate 17 above the recess 18.

A stop pin 23 carried by the plate 21 projects slightly beyond the surface thereof which is lowermost in use, and since the radial spacing of this pin from the centre of the plate 21 corresponds to the spacing of the stop pin 20 from the centre of the recess 18, it will be appreciated that these two pins interfere with one another, in use, thereby to prevent continuous rotation of the turntable plate 21 about the base plate 17. Figure 10 shows a skid pad 24, and five of these are used as respective bearings between the base and turntable, being received in respective holes 25 equi-angularly spaced on an arc in the undersurface of the turntable plate 21.

From Figures 8 and 9 it can be seen that the turntable plate 21 is provided with four screw holes 26 arranged in a rectangular formation, it being intended, as will be described, that the lower part of the adjustable column 11 is secured thereto by way of four screws (not shown) extending upwardly through the turntable plate. Centrally between the shorter sides of the rectangle defined by the holes 26 is a circular opening 27 into which the lower end of the gas strut 14 is intended to be received, being secured to the turntable plate 21 by means of a circlip (not shown).

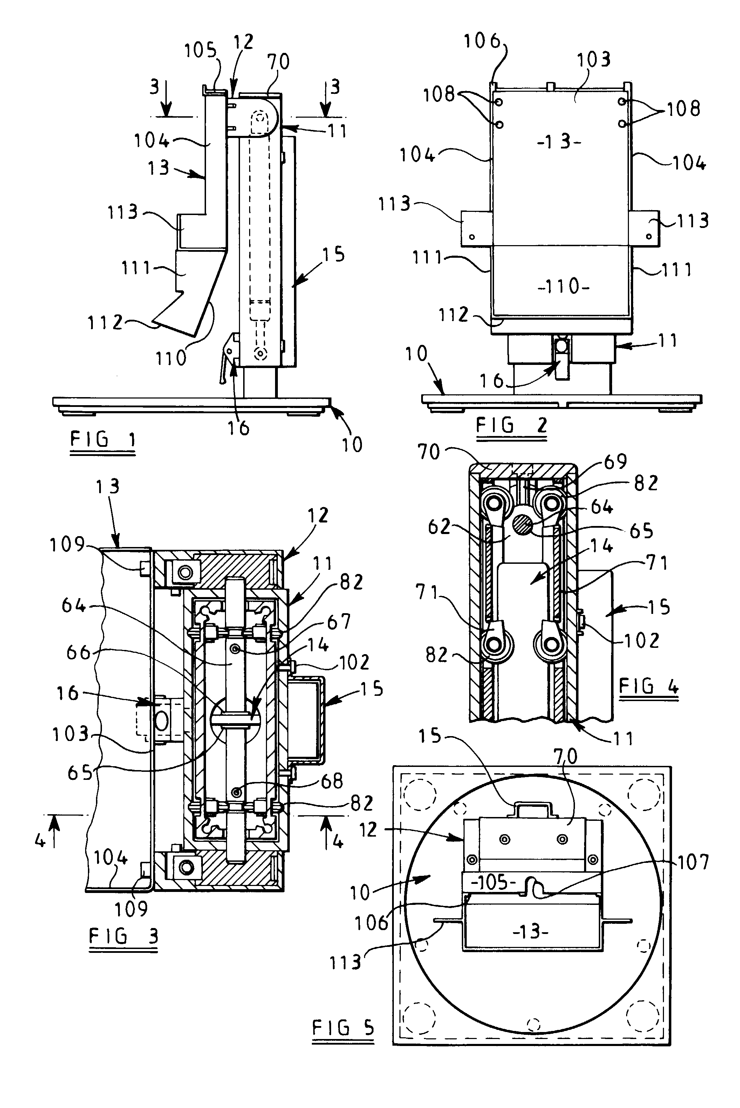

Column 11 comprises telescopically arranged rectangular inner and outer tubes 28, 29 respectively. In this embodiment, and as shown in Figure 1, the lower, fixed part of the column 11 is formed by the inner tube, and as shown in Figure 13 its respective four inner corners are formed, throughout its length, as part circular openings 30. By such means the screws extending upwardly through the screw holes 26 in the turntable plate 21 can engage in these openings 30 to secure the inner tube to the turntable plate 21 as previously mentioned. At its open upper end, both the longer front and rear walls of the inner tube are configurated to provide through openings. These openings are arranged in pairs both in the sense of being aligned transversely in the front and rear surfaces and also in the sense of having an upper opening and a lower opening aligned vertically. Thus as shown in Figures 11 and 12, there is a pair of spaced vertically aligned openings 31 in the front wall at respective positions adjacent the opposite side walls, and this arrangement is repeated in an aligned manner in the rear wall of the inner tube, as can also be appreciated from Figures 3 and 4. Additionally from Figure 12 it can be seen that between of each pair of spaced vertically aligned openings 31 the outer surface is recessed so that the surface of the outer wall between said openings lies inwards of the remainder of the surface of this front face of the inner tube. This arrangement is repeated between all of the pairs of the openings 31. Finally with regard to the inner tube 28, it can be seen from Figures 12 and 13 that in the opposite narrower sides of the inner tube extending downwardly from the top thereof are respective rectangular central slots 32, 33 respectively.

Slidably fitted about the inner tube 28 is the outer tube 29 shown in detail in Figures 14 to 16. The inner surfaces of both the longer front and rear walls of the outer tube 29 are each formed with a spaced pair of vertically extending generally V-shaped longitudinal grooves 34, with the grooves in one wall being transversely aligned with the grooves in the opposite wall, and with these grooves being in alignment with the four pairs of openings 31 respectively of the inner tube relative to which the outer tube slides. As will be more fully explained shortly, wheels carried by the inner tube and projecting through the openings 31 engage the inner surfaces of the front and rear walls of the outer tube at said grooves 34, so as to maintain concentricity of the inner and outer tubes, with the wheels running in said longitudinal grooves 34 during height adjustment of the column by the sliding of the outer tube over the fixed inner one.

For purposes to be described hereinafter, it can be seen from Figure 14 that the front surface of the outer tube at a lower central part thereof has a circular opening 35 to the interior of the tube with smaller circular threaded openings 36, 37 respectively vertically above and below the opening 35 and equi-spaced therefrom. Additionally three small circular openings 38-40 respectively are formed in the rear wall, and the two opposite side walls of the outer tube 29, these openings being disposed centrally in their respective walls, with the opening 38 being coaxial with that of the opening 35. Adjacent the upper end of the outer tube 29, disposed centrally in each side wall, there is a similar arrangement of openings as for openings 35-37, namely a larger circular hole 41 and upper and lower threaded holes 42, 43 respectively.

As shown in Figures 1, 3 and 5, the hinge arm assembly 12 is formed by a pair of identical, but oppositely handed, hinge arms disposed at respective opposite outer sides of the outer tube adjacent the open end thereof. Each hinge arm comprises a housing 44 in which is received a pivot bush 45 and a clip hinge 46. By providing the hinge arms high up on the column, substantial tilt adjustment, as will be described, is possible.

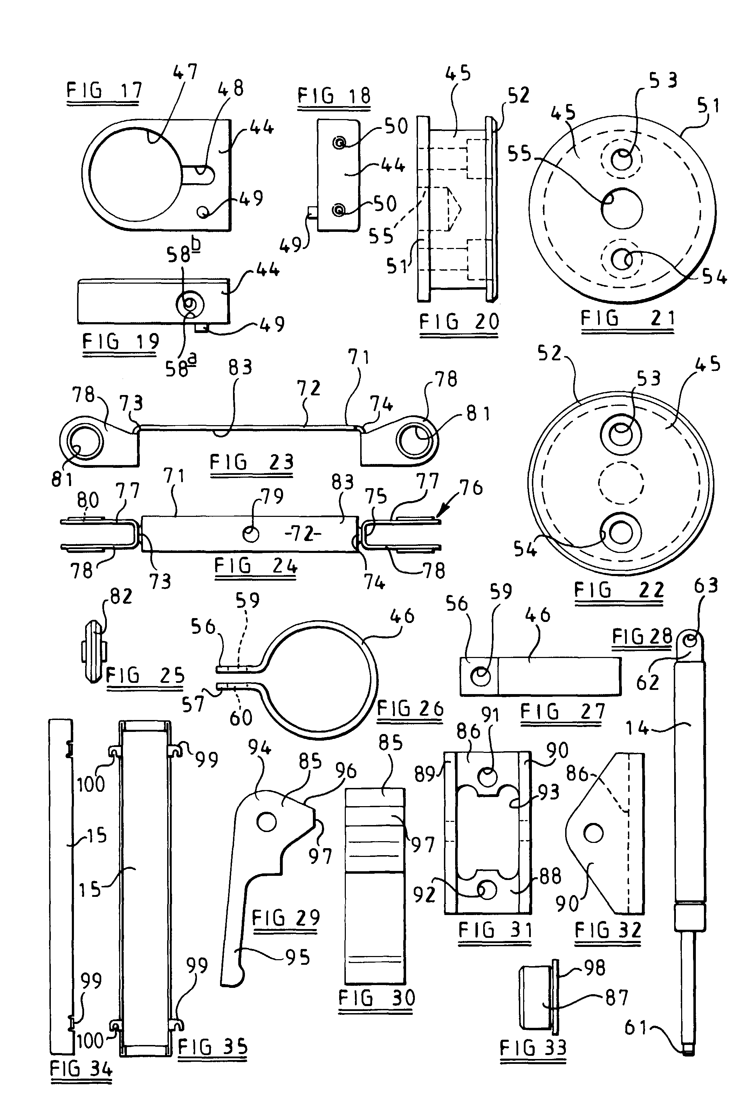

The housing 44, shown in Figures 17 to 19 is in the form of a generally stubby rectangular block having one end rounded and having, adjacent said rounded end, and in its inner surface, a circular recess 47 from which extends, in its disposition of use, a horizontal radial recess 48, which is also open at the inner surface of the housing. Extending from said inner surface at a position below the recess 48 is a cylindrical peg 49, whilst in the opposite, flat end surface of the housing remote from the curved end thereof, there is a pair of spaced vertical generally centrally disposed threaded bores 50.

The pivot bush 45 is a generally cylindrical member having annular shoulders 51, 52 at its respective opposite ends, the shoulder 51 being cylindrical and an outer part of the shoulder 52 being chamfered. The bush is sized to fit tightly within the recess 47 of the housing 44 as shown for example in Figure 3. Extending through the bush from the shoulder 52 to the shoulder 51 are a pair of vertically aligned spaced stepped bores 53, 54 respectively which are on the diameter of the bush and equi-spaced at opposite sides of a central circular blind bore 55 extending into the bush from the end thereof at which the shoulder 51 is disposed. The bush is sized to be tightly fitted within the recess 47 with its shoulder 52 at the base of the recess. Respective headed socket screws (not shown) are received in the stepped bores 53, 54 respectively, and these screws are intended to be engaged in the threaded holes 42, 43 of the outer tube 29, so as to secure one pivot bush 45 at each side of the outer tube, as shown best in Figure 3. Additionally received around each pivot bush between its two shoulders is the clip hinge 46 which is in the form of a stainless steel spring of cylindrical form having its ends flattened to form a pair of closely spaced parallel lugs 56, 57. As will be appreciated from Figure 3, the width of the clip hinge substantially corresponds to the distance between the shoulders 51 and 52, whilst the lugs 56, 57 are arranged to be received in the recess 48. As shown in Figure 19, the surface of the housing 44 which is uppermost in use is formed with a bore 58a which is stepped down below the recess 48 to provide a threaded section 58b thereby allowing the head of a set screw (not shown) to be received in the bore 58a with its threaded stem received through respective plain holes 59, 60 in the lugs 56, 57 of the hinge 46 and threadedly engaged in section 58b. In this manner the housing, bush and clip hinge are held captive, and as the screw head is accessible from the exterior of the housing, it is possible to adjust the friction between the pivot bush and the clip hinge by rotating the screw, thereby opening or closing the circular part of the clip hinge 46 and thus varying the engagement thereof on the pivot bush 45 about which it is disposed.

The gas strut 14 shown in Figure 28 is of generally conventional form and, as described, its lower end is secured to the turntable plate 21 by means of a circlip engaging in a groove 61 at the bottom of the 'piston arm' of the strut. The gas strut, which constitutes counterbalancing means for the monitor carried by the support, is received centrally in the column formed by the inner and outer tubes 28, 29 respectively, and has a flat ear 62 at its upper end, which as shown in Figures 3 and 4, lies normal to the longer sides of the inner tube. The ear 62 has a circular bore 63 therethrough and passing through this bore 63 is a circular-section steel top pin 64, shown in Figure 3. At its centre, where it passes through the bore 63, the pin 64 is formed with a pair of annular grooves spaced apart by the thickness of the ear 62, and respective circlips 65, 66 fit in said grooves at opposite sides of the ear, as shown in Figure 3, so as tightly to fix the top pin to the gas strut. The opposite ends of the top pin 64 extend through the slots 32, 33 when the column is in its lowered state, whereas as the outer tube is raised relative to the fixed lower tube, the pin moves clear of the upper end of the inner tube. These opposite ends are received through the holes 41 respectively in the opposite sides of the outer tube so as to ensure that extension of the gas strut is transmitted to the outer tube and thus results in the raising thereof. Finally after passing through the holes 41, the respective opposite ends of the top pin 64 are received in the blind bores 55 in the oppositely handed pivot bushes 45, again as best shown in Figure 3, which bushes, as described, are secured to the outer tube. At respectively equi-spaced positions at opposite sides of its grooves which receive the circlips 65, 66, the upwardly facing surface of the pin is provided with respective threaded bores 67, 68. These are to receive socket screws, one of which is shown in Figure 4 at 69, which have their head and part of their shank received in a stepped bore in a rectangular top cap 70 which is thereby fitted to the upper end of the outer tube 29 thereby to close it as shown best in Figure 4.

Figures 23 and 24 show a spring bogie 71 formed from a single piece of stainless steel. It is formed of a flat rectangular base part 72 about the centre of which the bogie is symmetrical both transversely and longitudinally. At opposite ends of the base part 72 are short curved neck portions 73, 74 respectively which lead to one side of a base 75 of a generally U-shaped mount 76 which is formed with spaced, parallel arms 77, 78. There is a circular opening 79 through the centre of the base part 72, and respective aligned circular openings 80, 81 are provided through the arms 77, 78 for the mounting therebetween of a wheel 82 shown in Figure 25. The wheel has the profile of its outer periphery in the form of a generally V-shape, to match that of the V-shaped grooves 34 in the facing inner surfaces of the outer tube 29.

It can be seen from Figures 3 and 4 that a spring bogie 71 is mounted at each of the four pairs of vertically aligned openings 31 in the front and rear walls of the inner tube 28. As shown best in Figure 4, the surface 83 of the base part 72 at the side thereof over which the neck portions extend is held in engagement with the outwardly facing surface of the inner tube which, as described, is recesses so as to lie below normal level of the outer surface of the inner tube. The bogie is secured in this position by means of a screw passing through the opening 79 and into a threaded opening 84 which, as shown in Figures 11 and 12, is disposed mid-way between the pair of aligned vertical openings 31. With each spring bogie so secured, the wheels 82 at its upper and lower ends extend through the openings 31 respectively and engage with the inner surfaces respectively of the outer tube 29 at the V-shaped grooves 34. As can be seen from Figure 3, the top pin 64 is formed with annular grooves at the respective axial positions therealong at which the upper bogie wheels are disposed so as not to interfere therewith.

As mentioned, a smooth sliding of the outer tube over the inner tube is effected by means of the bogies 71 and wheels 82. The inner and outer tubes could be produced by fabrication, casting or extruding methods and the use of the spring loaded bogies, to which the wheels are mounted before the bogies are attached to the inner tube, are designed to eliminate all slack between the inner and outer tubes, even when the tubes are manufactured to large dimensional tolerances. In the worst case tolerance situation the wheels/bogies are still under compression sufficient to maintain the two tubes parallel to each other. In addition, to ensure smooth sliding between the tubes, three skid pads 24 or equivalent can be fitted inside the two sides and rear wall of the outer tube. Again these stabilise and keep the outer tube concentric with the inner tube. These skid pads would be fitted at the openings 38 to 40 respectively.

Although height adjustment is provided by the linking of the inner and outer tubes 28, 29 by the gas strut 14, retention means would, in practice, normally be provided, being constituted, for example, by a variable friction mechanism or lock attached to the outer tube, preferably at the lower part of the front wall thereof, to exert pressure onto the inner tube. This feature enables the gas strut to be overpowered, and the monitor to rise itself or to be moved to any desired retained height adjustment position, by momentarily or otherwise releasing the screw or lock. In the embodiment illustrated in the drawings, there is, as mentioned, a lock assembly 16 shown assembled best in Figure 1. The lock assembly comprises a lock cam 85, a lock retainer 86 and a plastics material pad brake 87. The retainer 86 has a flat rectangular base 88 with normally upstanding wings 89, 90 at its respective opposite longer sides. The retainer is secured to the front face of the outer tube by screws extending through upper and lower holes 91, 92 respectively in the base into the threaded openings 36, 37 in the inner tube front wall. Between the holes 91, 92, the base 88 is provided with a large central aperture 93 which registers with the circular opening 35 in the front wall of the outer tube to allow access therethrough to the outer surface of the front wall of the inner tube. A pivot pin is mounted between the wings 89, 90 by way of its respective ends being received in respective circular openings through said wings. Pivotally mounted on said pivot pin between the wings is said lock cam 85 which is in the form of a lever having a head 94 around the pivot pin and integral depending manually operable grip part 95. The head has a cam surface 96 leading to a nose surface 97 which is almost vertical, as shown in Figure 1, when the lock cam is in its downward most locked position. In operation the cam surface 96 or the nose surface 97 bears upon the pad brake 87 which has a cylindrical part fitted in the opening 35 with an end flange 98 being disposed at the surface of the outer tube. Accordingly the pad brake 87 acts as a pressure pad and is forced against the inner tube when the locked cam is in its locked position with the nose surface 97 applying pressure to the pad brake 87 in an overcentre position. If however the grip part 95 is released by moving it upwardly, as viewed in Figure 1, the cam surface 96 the engages the pad brake 87 so as to relieve the inwards force thereof and allow sliding movement of the outer tube over the inner one. In an alternative lock construction the lever could merely frictionally 'lock' the tube 28.

The cable duct 15 shown in Figures 34 and 35, can be seen to be in the form of a rectangular open ended channel which on its opposite outer side surfaces, both at the top and the bottom of the duct, is formed with ears 99 which are formed with slots 100 which are downwardly open. The outer surface of the rear wall of the outer tube 29 is formed with upper and lower pairs of spaced screw holes 101 which receives screws 102 so that, as shown in, for example Figure 4, the cable duct can be fitted to this rear wall of the outer tube by arranging for the shanks of the screws to be received in the slots 100 as the duct is pressed tightly against the outer surface of the rear wall of the outer tube and slid slightly downwardly with the slots in alignment with the screw shanks. As will be appreciated, this facilitates both fixing and removal of the cable duct.

To attach a flat panel monitor to the support, there is provided the adapter plate 13 which can equally be considered as an interface or connecting plate. This plate can be of any suitable form and thus need not be as shown in the drawings. The intention is to change the plate as required for differing monitor types. The plate is also used as a cable management box where the cables can be re-routed such that they exit out of the top of the box and can then be run over the hinge arm area and down to the back of the outer tube and into the cable duct.

A Standard exists for the attachment of stands, arms etc., to flat panel monitors. At present many LCD monitor manufacturers produce products which do not conform to this Standard and therefore cannot be directly mounted to arms and stands that do. The applicants have therefore developed custom adapter plates which on one side connect to the non-conforming mounting holes of the monitors and on the other side conform to the standard mounting holes. Such adapter plates would essentially correspond to the one shown in Figures 1, 2 and 5, but would incorporate differently positioned mounting threaded holes. Of course different sizes of the same adapter plate can be provided for different sizes of monitor. The plate 13 shown in the drawings is a pressing having an upper part which is generally in the form of a flat rectangular base 103 which is formed with upstanding opposite sides 104 and an upstanding top wall 105 which is formed with lugs 106 bent to lie parallel to the base 103. This top wall is provided with a shaped opening 107 through which it is intended cables of the monitor should pass as mentioned above. Two pairs of spaced holes 108 are provided at the top of the base 103 adjacent the sides 104 respectively, as best shown in Figure 2, these pairs of holes corresponding to the threaded bores 50 in the flat end surface of the housing 44 of the hinge arm assembly. Accordingly as can be seen from Figures 1 and 3, the base 103, and thus the plate 13 is secured to support by virtue of the two hinge arms at opposite sides of the outer tube, with four screws 109 passing through the four holes 108 into the four threaded holes 50 provided by the two housing 44. Thus the plate and the hinge arm assembly alone or together constitute connection means.

The lower part of the plate 13 represents a continuation of the base 103, but is angled forwardly to provide a base part 110 with opposite sides 111 and a lower closure wall 112, the front surfaces of both sides 111 being configurated to provide, for example, a generally vertical upper part and a forwardly angled lower part. At the junction between the vertical base 103 and the forwardly directed base part 110, the sides 104 are extended further forwardly and then bent through 90° to provide a pair of outer ears 113 with holes therein for connection, for example, to the monitor carried by the plate 13.

Although it is believed that operation of the support, in use, will be substantially clear from the construction of the support described above, explanation of the use of the support will now be given.

Height adjustment is provided by the column 11. The gas strut, which links the inner and outer tubes, desirably has an output force equivalent to the mass of the monitor carried by the support. Thus when the column is 'down' the gas strut is compressed, either fully or partially (by stop means), and when the column is 'up' the gas strut is fully extended or limited by a stop feature. In this way the gas strut can constitute retention means.

A gas strut is a convenient space effective way of providing a counterbalancing force, and by appropriate calculations, knowing the mass and centre of gravity position of the equipment to be supported, a gas strut can in most applications be specified to match very closely the theoretical forces within a useful range of lift adjustment. A gas strut is therefore preferable for the present invention, but this does not exclude its omission, nor the use of helical coil springs, spring washers, and the like, either in series with the gas strut or on their own, to provide suitable counterbalancing forces.

As stated, the wheels 82 are fitted to ensure that the outer tube will run parallel over the inner tube, and that frictional forces will be minimised when adjusting the length of the column. The skid pads fitted inside the two sides and rear wall of the outer tube prevent the outer tube tilting excessively due to the centre of mass of the attached monitor being offset from the column. Again as previously mentioned, concentricity of the inner and outer tubes is controlled by the provision of the longitudinal grooves 34. Also as previously mentioned, slack between the inner and outer tubes is eliminated by the use of the spring loaded bogies.

As described in relation to the lock assembly 16, this feature is normally provided, being particularly desirable when a user prefers the gas strut to be overpowered. The use of a friction pad, for example in the form of the pad brake 87 prevents damage or marking of the inner tube.

With regard to tilt adjustment of the monitor, as provided by the hinge arm assembly 12, lengths and other dimensions of the housings 44 can be tailored to suit various plates 13 as required for various monitors. Ideally the distance between the monitor centre of mass and the hinge point is minimised, consistent with the requirement to change the tilt setting of the monitor substantially without the monitor colliding with the height adjustment column. Minimising the full said distance also minimises the offset load of the monitor mass onto the support column, which is desirable to minimise the size or strength of the base assembly or attachment hardware for the free standing or rigid mounting of the column to a desk top etc. To those skilled in the art, the above tilt feature can be arranged to provide a range of adjustments such that any monitor screen can be positioned typically from 5° forward of the vertical, to 60° backwards to provide an ideal screen viewing position for both seated or standing users. The pins 49 are provided to limit the rotation of the hinge arms by such pins engaging against the outer tube.

The required monitor tilt position is maintained by virtue of a friction mechanism. As described this is effected by the clip hinge which rotates with the hinge arm, a screw being used to adjust the friction between the pivot bush and the clip hinge, this screw also passing through the hinge arm such that three components are held captive, with the pivot bush being rigidly attached to the outer tube. This enables a friction force to be applied sufficient to prevent rotation of the monitor/arm combination mass itself, but allowing rotation or tilt by a small additional force provided by the user. It is possible that two or more of these components could be integrated into the single component, given suitable choice of materials.

The support comprises a free standing rotate feature by virtue of the turntable plate rotating relative to the base plate as described, with the support rotating by virtue of the attachment of the lower end of the outer tube to the turntable plate.

An alternative fixed rotate feature could be provided by installing a hinge pin or similar part under the support column which would locate into a socket in a workstation desktop. Another alternative is rigidly to attach the support column to a work station desktop, where a user requires a fixed installation.

Cable management is achieved by routing the monitor input/output cables through the shaped opening 107 and, as described, into the cable duct which then hides the cables running down the rear of the outer tube. This is a customer removable item.

Low user force for the adjustable features is effected by using a gas spring or similar device for height changes, and using the friction band principle for the tilt arms.

Various possible alternative constructions will now be mentioned. Firstly with regard to the base assembly, this could simply be a circular base plate attached to the lower end of the inner tube, or attached via the lower part of the gas strut. Underneath the base plate would be a swivel ring and between the swivel ring and the base plate could be an annular swivel bearing, with there also being a swivel bearing at the location of a peg depending from the base plate which is received in an opening in the swivel ring. The swivel ring and bearing could be integrated into one part given a suitable choice of materials.

An alternative form of lock assembly 16 could be provided by a thumb screw attached to the bottom of the outer tube wall to exert pressure onto the inner tube. The thumb screw could merely act through a friction pad which would prevent damage or marking of the inner tube, the friction pad being disposed between the inner and outer tubes.

It will be appreciated that whilst a support of the invention will incorporate height adjustment, it need not, as mentioned above, incorporate a rotate feature, as the column could be fixed to a workstation, nor need it incorporate a tilt feature, although this would normally be desirable.

The component parts of the support would, for example, be of aluminium or plastics material, although the plate 13 could be a mild steel pressing.

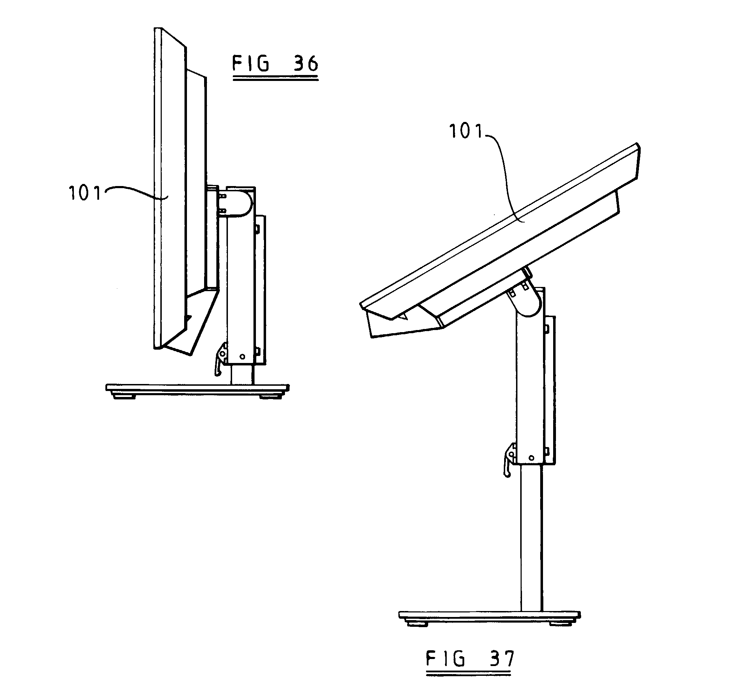

Figures 36 and 37 show a monitor 101 carried by a support of the invention. In Figure 36 the monitor is vertical and the column in its lowered state, whilst in Figure 37 the monitor is tilted rearwardly at its maximum and the column is in its raised state.

## Claims

1. A support, particularly for flat-panel monitors or the like, comprising first and second relatively slidable inner and outer telescopic members forming a height adjustable column, retention means for retaining the column in at least two different adjusted height positions when the support carries a monitor or the like, in use, and connection means extending from the column and adapted to be connected directly or indirectly, in use, to the monitor or the like to allow it to be tilted relative to the column.

2. A support as claimed in Claim 1, wherein the inner and outer members are linked by counterbalancing means.

3. A support as claimed in Claim 2, wherein the two different adjusted height positions correspond to a'down' position of the column in which the counterbalancing means is partially or fully compressed and an 'up' position of the column in which the counterbalancing means is partially or fully extended.

4. A support as claimed in Claim 2 or Claim 3, wherein the counterbalancing means is a gas strut.

5. A support as claimed in either Claim 3 or Claim 4, wherein the retention means comprise stop means limiting the compression and extension respectively of the counterbalancing means in said 'down' and 'up' positions of the column.

6. A support as claimed in any one of Claims 1 to 4, wherein the retention means is carried by the outer tube and exerts engagement pressure on the inner tube.

7. A support as claimed in Claim 6, wherein the retention means is a releasable locking mechanism comprising a pivoted lever associated with the outer tube, the lever being movable between a release position, in which sliding adjustment between the inner and outer tubes can occur, and a locked position, in which such sliding adjustment is prevented.

8. A support as claimed in Claim 9, wherein the lever has a operative portion which in the locked position of the lever forces a pressure member against the inner tube to prevent said sliding adjustment.

9. A support as claimed in Claim 8, wherein the operative portion is provided with a cam surface which acts on said pressure member as the lever is pivoted to said locking position.

10. A support as claimed in Claim 9, wherein a body of said pressure member is received in an opening through a wall of the outer tube, with a flange of the body member received between the inner and outer tubes.

11. A lever as claimed in any one of Claims 7 to 10, wherein the lever is pivotally mounted on a lock retainer secured to the outer tube.

12. A support as claimed in Claim 6, wherein the retention means is a thumbscrew threadedly engaged with said outer tube.

13. A support as claimed in Claim 12, wherein the thumbscrew acts, in use, on a friction member between the outer and inner tubes.

14. A support as claimed in any one of the preceding claims, wherein at least one anti-tilt member is fitted to act between the outer and inner tubes to resist tilting of the outer tube when said monitor or the like is carried by the support, in use.

15. A support as claimed in Claim 14, wherein said at least one anti-tilt member is a skid-pad having a part fitted in an opening in the outer tube at the lower end thereof.

16. A support as claimed in any one of the preceding claims, in which wheels fixed positionally relative to the inner tube are arranged to run against respective inner surfaces of the outer tube when sliding adjustment between the outer and inner tubes take place, thereby to control concentricity of said tubes.

17. A support as claimed in Claim 16, wherein the wheels are arranged to run in respective longitudinal grooves in said inner surfaces.

18. A support as claimed in Claim 16 or Claim 17, wherein the wheels are carried on at least one spring loaded bogie secured to the inner tube.

19. A support as claimed in Claim 18, wherein the bogie has a flat central part with respective pairs of spaced mounting lugs at opposite ends thereof, between which pairs of lugs respective wheels are mounted, a wall of the inner tube having a outer surface facing an inner surface of the outer tube, said outer surface having a recessed portion at which the central part of the bogie is received and secured to the inner tube, the wheels of said bogie extending through respective openings through said wall of the inner tube at respective opposite ends of said recessed portion.

20. A support as claimed in either Claim 18 or Claim 19, wherein a first pair of transversely spaced bogies are secured to one wall of said inner tube, and a second pair of identically transversely spaced bogies are secured to an opposite parallel wall of said inner tube in respective longitudinal alignment with said first pair to provide a symmetrical arrangement of bogies longitudinally and transversely of the centre of the inner tube, with each bogie mounting respective wheels at said lugs thereof.

21. A support as claimed in any one of the preceding claims, wherein the connection means comprise at least one pivot hinge arm at an outer surface of the outer tube.

22. A support as claimed in Claim 21, wherein the pivot hinge arm comprises a pivot bush mounted on a pivot extending from said outer surface of the outer tube, to which surface the pivot bush is secured.

23. A support as claimed in Claim 22, wherein the pivot bush is received in a housing, the housing having means for securing it, in use, to a carrier for the monitor or the like.

24. A support as claimed in Claim 23, wherein the means for securing it to said carrier is at least one screw-threaded hole.

25. A support as claimed in Claim 23 or Claim 24, wherein around part of the pivot bush is a clip which is adjustable in size to adjust friction between itself and the pivot bush, the clip being arranged in the housing so as to pivot therewith.

26. A support as claimed in Claim 25, wherein the size of the clip is adjustable by means of a screw passing through holes in respective parallel spaced lugs at respective free ends of the clip and having its shank screw-threadedly engaged with the housing.

27. A support as claimed in Claim 26, wherein the screw holds the housing, clip and pivot bush captive, and is adjustable exteriorly of the housing to vary said size of the clip.

28. A support as claimed in any one of Claims 22 to 27, wherein there are two pivot hinge arms at respective parallel opposite outer surfaces of the outer tube, the pivot bushes of the pivot hinge arms being mounted on respective pivots extending from said respective outer surfaces of the outer tube.

29. A support as claimed in Claim 28, wherein the pivots are defined by respective opposite ends of a connecting pin extending through parallel opposite walls of the outer tube defining said parallel opposite outer surfaces thereof.

30. A support as claimed in Claim 29, wherein said pin is connected to said or a gas strut to link the outer tube thereto.

31. A support as claimed in Claim 28 or Claim 29, wherein a top cap of the column is secured to the outer tube by screw means threadedly engaged with said pin.

32. A support as claimed in any one of the preceding claims, wherein a cable duct is provided at an outer surface of the outer tube.

33. A support as claimed in Claim 32, wherein the cable duct is removably fitted to said outer surface by slotted ears thereof engaging onto the respective shanks of headed screws projecting from said outer surface.

34. A support as claimed in Claim 35, wherein the cable duct is an open ended channel.

35. A support as claimed in any one of the preceding claims, wherein the column is carried on a rotatable base assembly.

36. A support as claimed in Claim 35, wherein the inner tube is secured directly to the rotatable base assembly.

37. A support as claimed in Claim 36, wherein the inner tube is secured to a rotatable turntable of the rotatable base assembly by screw means carried by the turntable engaging with threaded bore means at the end of the inner tube.

38. A support as claimed in Claim 37, wherein said or a gas strut is a telescopic assembly having a rod, a free end of which is secured to said turntable.

39. A support as claimed in Claim 38, wherein at said free end of the rod there is provided a groove which is engaged by clip means received in a recess in said turntable thereby to secure said rod to the turntable.

40. A support as claimed in any one of Claims 35 to 39, wherein the rotatable base assembly comprises a circular rotatable member carried by a base member, with bearing means therebetween.

41. A support as claimed in Claim 40, wherein the bearing means are skid pads fitted to the rotatable member.

42. A support as claimed in Claim 41, wherein the rotatable member is received in a recess in the base member.

43. A support as claimed in Claim 35, wherein the base assembly comprises a rotatable member carried by a base member, with a swivel ring therebetween.

44. A support as claimed in Claim 40 or Claim 43, wherein stop means are provided to limit rotation of the rotatable member.

45. A support as claimed in Claim 44, wherein the stop means are pins carried by the rotatable member and the base member respectively.

46. A support as claimed in Claim 21, wherein the or each pivot hinge arm has stop means which engages the outer tube, in use, to limit pivoting of said pivot hinge arm.

47. A support as claimed in Claim 23, wherein the pivot bush is received in a recess in the housing, which recess is open at a surface of the housing from which extends a stop pin which, in use, engages said outer tube to limit pivoting of said pivot hinge arm.

48. A support, particularly for flat-panel monitors or the like, substantially as hereinbefore described, with reference to, and as shown in the accompanying drawings.
